# FASCICULE DE BREVET EUROPEEN

(11) **EP 3 138 358 B1**
(45) Date de publication et mention de la délivrance du brevet: **22.08.2018**
(21) Numéro de dépôt: 15725734.6
(22) Date de dépôt: 13.04.2015
(51) Int. Cl.: H04W 92/02, H04L 12/66, H04L 12/741, H04W 76/12

(54) **PROCEDE DE TRAITEMENT D'UN PAQUET DE DONNEES RELATIF A UN SERVICE**
VERFAHREN ZUR VERARBEITUNG EINES DATENPAKETS IN BEZUG AUF EINEN DIENST
METHOD OF PROCESSING A DATA PACKET RELATING TO A SERVICE

(30) Priorité: 30.04.2014 FR 1453999
(43) Date de publication de la demande: 08.03.2017
(73) Titulaire: Orange, 75015 Paris (FR)
(72) Inventeur: ZHOU, Yu, F-92130 Issy Les Moulineaux (FR); HE, Ruan, F-92130 Issy Les Moulineaux (FR)
(86) Numéro de dépôt international: PCT/FR2015/050987
(87) Numéro de publication internationale: WO 2015/166158

(56) Documents cités:
- WO-A1-00/48365
- JEONGCHEOL LEE ET AL: "Hop-by-hop control for reliable data dissemination in wireless sensor networks", AUTONOMOUS DECENTRALIZED SYSTEMS, 2009. ISADS '09. INTERNATIONAL SYMPOSIUM ON, IEEE, PISCATAWAY, NJ, USA, 23 mars 2009 (2009-03-23), pages 1-6, XP031514903, ISBN: 978-1-4244-4327-7

## Description

L'invention se rapporte au domaine général des télécommunications. Elle concerne plus particulièrement le traitement d'un paquet de données relatif à un service dans un réseau de communication mobile.

Un réseau de communication mobile permet à un terminal utilisateur d'accéder à des réseaux de communication par paquets de données (*Packet Data Network* en anglais) tel que le réseau Internet. L'interconnexion entre un réseau de communication mobile et un réseau de communication par paquets de données est assurée par des passerelles d'interconnexion. Dans un réseau UMTS une telle passerelle est appelée passerelle GGSN (pour *Gateway GPRS Support Node*). Cette passerelle permet plus précisément de transmettre le trafic relatif à une session PDP (pour *Packet Data Protocol*) entre un terminal utilisateur auquel est associé une adresse IP et un réseau de communication par paquets identifié par un APN (pour *Access Point Name*). La session est matérialisée par un contexte PDP constitué d'un ensemble d'informations comprenant l'adresse PDP associée au terminal utilisateur, l'APN, une information relative au protocole utlilisé (i.e. IPv4 pour *Internet Protocol version 4* ou IPv6 pour *Internet Protocol version 6*), et un profil de qualité de service. La passerelle d'interconnexion a également pour fonction de traduire l'APN identifiant le réseau à commutation de paquets en adresse IP (pour *Internet Protocol*) et de gérer le contexte PDP. De manière équivalente pour un réseau EPS, l'interconnexion avec un réseau de communication par paquets est assurée par une passerelle d'interconnexion P-GW (pour *Packet Data Network Gateway*) assurant les mêmes fonctions que la passerelle GGSN. De même que le contexte PDP permet de caractériser une session entre un terminal utilisateur et un réseau de communication par paquets, dans un réseau EPS la session est caractérisée par une connexion virtuelle appelée « EPS bearer ».

Les interfaces entre terminaux utilisateurs, réseau d'accès, et réseau coeur d'un réseau de communication mobile ont été spécifiés par le groupe de normalisation 3GPP (pour *3rd Generation Partnership Project*). Cependant, les interfaces entre le réseau de communication mobile et les réseaux de communication par paquets externes au réseau de communication mobile (interface Gi pour un réseau 2G/3G et SGi pour un réseau 4G) ne le sont pas. Il n'existe donc pas d'implémentation standardisée de ces interfaces et un opérateur de réseau de communication mobile est susceptible de déployer différentes infrastructures réseaux dédiées pour un type de client (e.g. opérateur de réseaux mobile virtuel, entreprise privée), ou peut également choisir de déployer une même infrastructure réseau partagée par plusieurs types de client. Ceci tend à complexifier la gestion de ces interfaces d'un point de vue opérationnel et en termes de maintenance.

Par ailleurs, lorsqu'un même réseau de communication mobile est déployé pour plusieurs clients d'un même opérateur, les passerelles d'interconnexion sont de fait connectées aux réseaux de communication par paquets de ces clients (e.g. Internet, réseau privé virtuel, réseau d'opérateur de réseau mobile virtuel). Les passerelles d'interconnexion utilisent alors l'APN, pour distinguer les réseaux de communication par paquets auxquels peut accéder un terminal utilisateur depuis le réseau de l'opérateur de réseau de communication mobile. Une passerelle dispose notamment pour chaque APN d'un chemin réseau associé. Ces chemins réseaux sont en outre configurés de telle sorte qu'un ensemble de fonctions réseaux élémentaires soit mis en oeuvre par l'opérateur de réseau de communication mobile afin que puisse être fourni à la demande d'un terminal utilisateur un service d'un réseau de communication par paquets. Ces chemins réseaux constituent ainsi des suites ordonnées de fonctions réseaux élémentaires, ou séquence de fonctions réseaux élémentaires, mises en oeuvre dans le réseau de l'opérateur de réseau de communication mobile pour un service donné. Ces fonctions réseaux élémentaires sont définies comme l'ensemble des fonctions fournies par un opérateur de réseau de communication mobile pour traiter un paquet de données émis depuis une passerelle d'interconnexion vers un réseau d'un fournisseur de service. Ces fonctions réseaux élémentaires sont par exemple des services de traduction d'adresses réseaux, de pare-feu, de répartition de charge, de transcodage, de mise en cache, d'optimisation de requête, d'enrichissement de paquets réseaux, etc.

La gestion de l'interconnexion selon les méthodes connues de l'état de la technique comporte cependant des inconvénients. La configuration des APN est statique. La séquence de fonctions réseaux élémentaires associée à un APN est fixe, alors que les fonctions réseaux élémentaires requises diffèrent selon le service demandé. De plus proposer les mêmes fonctions réseaux élémentaires pour différents services d'un même APN ne permet pas une gestion d'erreurs optimisée. Lorsqu'une fonction réseau élémentaire d'une séquence de fonctions réseaux élémentaires associée à un APN ne peut être mise en oeuvre suite par exemple à une défaillance du réseau, l'ensemble des services accessibles par cet APN peut en être affecté, y compris les services qui n'ont pas besoin de cette fonction réseaux élémentaire. La séquence de fonctions réseaux élémentaires associée à un APN ne peut en outre être modifiée une fois définie. Des ressources physiques sont en particulier allouées pour certaines fonctions réseaux élémentaires qui ne seront mises en oeuvres que pour certains services. Il en résulte notamment une surcharge réseau qui est inutile. Le document WO 00/48365 A1, décrit un arrangement pour l'interconnexion d'un réseau local et un réseau de paquet de données comprenant au moins un noeud virtuel distribué fournissant une fonction de « gateway » et comprenant un noeud d'interconnexion assurant la conversion entre un protocole utilisé dans le réseau local et un protocole utilisé dans le réseau de paquets de données. Le document JEONGCHEOL LEE ET AL: "Hop-by-hop control for reliable data dissemination in wireless sensor networks", divulgue la mise en oeuvre d'un noeud virtuel distribué, composé d'entités interconnectées notamment pour assurer la conversion de protocole.

L'invention est définie dans les revendications en annexe. Tout mode de réalisation décrit ci-dessous, qui ne serait pas défini dans les revendications, est considéré comme exemple ne faisant pas partie de l'invention. Un des buts de l'invention est de remédier à des insuffisances/inconvénients de l'état de la technique et/ou d'y apporter des améliorations.

Selon un premier aspect l'invention concerne un procédé de traitement d'un paquet de données relatif à un service, le paquet étant acheminé par une passerelle d'interconnexion entre un réseau de communication mobile et un réseau de communication par paquets, à destination du réseau de communication par paquets, le procédé comprenant une étape d'obtention par un noeud virtualisé d'un identifiant du service auquel le paquet est relatif. Le procédé comprend en outre :
- une étape d'obtention à partir de l'identifiant de service, d'une séquence d'au moins une fonction réseau élémentaire pour traiter le paquet ;
- pour traiter le paquet, la première fonction de la séquence correspondant à la première itération à une fonction courante, le paquet étant transmis en entrée d'un noeud virtualisé apte à mettre en oeuvre une fonction courante :
- application de la fonction courante au paquet en entrée pour obtenir un paquet en sortie par le noeud virtualisé ;
- s'il existe une fonction suivant la fonction courante dans la séquence :
   - sélection d'un prochain noeud virtualisé apte à mettre en oeuvre la fonction suivant la fonction courante dans la séquence, la fonction devenant alors fonction courante ;
   - envoi du paquet en sortie au noeud sélectionné, le paquet en sortie devenant ainsi paquet en entrée pour l'application de la fonction courante ;
- s'il n'existe pas de fonction suivant la fonction courante dans la séquence, transmission du paquet en sortie au réseau de communication par paquets.

Le procédé permet un contrôle flexible et dynamique sur les fonctions réseaux élémentaires mises en oeuvre dans le réseau de communication mobile d'un opérateur de télécommunication. Ce contrôle flexible et dynamique des fonctions réseaux élémentaires est notamment rendu possible par l'utilisation de noeuds virtualisés pour la mise en oeuvre de ces fonctions. Un noeud virtualisé est une virtualisation d'une ressource informatique. Un tel noeud simule à titre d'exemple non limitatif des ressources matérielles et logicielles d'un équipement informatique (e.g. un serveur), telles que sa mémoire, son processeur, son disque dur, ou encore son système d'exploitation, et permet d'exécuter des programmes ou plus spécifiquement de mettre en oeuvre des fonctions réseaux élémentaires dans les mêmes conditions que celles de l'équipement simulé. Un tel noeud virtualisé est également connu sous le nom de « machine virtuelle ».

Le procédé permet ainsi de mettre en oeuvre les fonctions réseaux élémentaires fournies par l'opérateur de réseau de communication mobile, en faisant abstraction des contraintes matérielles qui leur sont généralement associées dans les techniques connues de l'état de l'art. L'opérateur de réseau de communication mobile n'a plus besoin de ressources matérielles dédiées pour la mise en oeuvre des fonctions réseaux élémentaires. Il est ainsi possible pour l'opérateur de réseau de communication mobile d'utiliser des ressources externes à son propre réseau pour les mettre en oeuvre. L'opérateur de réseau de communication mobile n'a en particulier plus besoin de mobiliser des ressources en continu pour chacune des fonctions réseaux élémentaires. Ces dernières sont mobilisées au besoin, de manière dynamique, seulement pour les fonctions réseaux élémentaires nécessaires à la fourniture du service auquel se rapporte le paquet à traiter.

Plusieurs fonctions réseaux élémentaires peuvent également avantageusement être mises en oeuvre sur un même équipement physique. Les capacités d'un tel équipement physique sont alors pleinement exploitées, ce qui réduit son taux d'inutilisation. La gestion des ressources matérielles utilisées par les fonctions réseaux élémentaires nécessaires à la fourniture du service est ainsi optimisée. Cela se traduit notamment par une économie des ressources matérielles du réseau de communication mobile.

La mise en oeuvre de fonctions réseaux élémentaires par des noeuds virtualisés permet également de renforcer l'intégrité du réseau de communication mobile. Les fonctions réseaux élémentaires sont mises en oeuvre par des noeuds virtualisés isolés. Plus précisément, une fonction réseau élémentaire peut être mise en oeuvre par plusieurs noeuds virtualisés, mais un noeud virtualisé ne peut mettre en oeuvre qu'une seule fonction réseau élémentaire. Aussi un incident intervenant lors de la mise en oeuvre d'une fonction réseau élémentaire n'affecte pas les autres fonctions réseaux élémentaires en cours pour traiter un paquet, ni n'affecte les fonctions réseaux élémentaires mises en oeuvre pour des sessions parallèles à la session à laquelle se rapporte un paquet en cours de traitement. La détection d'erreurs est en outre elle-même facilitée par le cloisonnement de la mise en oeuvre de chaque fonction réseau élémentaire. La détection de la source d'une erreur est notamment plus aisée.

Le procédé permet plus spécifiquement d'appliquer la séquence de fonctions réseaux élémentaires la plus adaptée au service. Les fonctions réseaux élémentaires ne sont en effet pas prédéfinies en association avec un APN donné susceptible par exemple d'être partagé par plusieurs services, mais elles sont au contraire obtenues à partir de l'identifiant de service du paquet traité. Seules les fonctions réseaux élémentaires nécessaires pour le service auquel se rapporte le paquet sont ainsi mises en oeuvre. La séquence de fonctions réseaux élémentaires mises en oeuvre pour traiter le paquet peut ainsi être personnalisée en fonction du service.

Les différents modes ou caractéristiques de réalisation mentionnés ci-après peuvent être ajoutés indépendamment ou en combinaison les uns avec les autres, aux étapes du procédé de traitement tel que défini précédemment.

Selon une caractéristique particulière l'application de la fonction courante sur le paquet déclenche une mise à jour de la séquence d'au moins une fonction réseau élémentaire.

La mise à jour de la séquence est réalisée par modification de la séquence ou par remplacement de la séquence par une nouvelle séquence. Le procédé permet de mettre à jour la séquence de fonctions réseaux élémentaires lors de son application sur le paquet. Le procédé permet ainsi de mettre à jour la séquence de fonctions réseaux élémentaires dynamiquement en fonction du résultat d'une fonction réseau élémentaire particulière appliquée sur le paquet. Une fonction réseau élémentaire peut par exemple être dédiée au décompte de facturation d'un utilisateur abonné à un service premium de vidéo à la demande, et être en charge de vérifier un approvisionnement suffisant d'un compte de l'utilisateur pour l'accès à ce service. Lorsque le compte de l'utilisateur n'est pas suffisamment approvisionné, la fonction élémentaire peut par exemple, plutôt que d'interrompre brutalement l'accès au service en générant une erreur, provoquer une mise à jour de la séquence de fonctions réseaux élémentaires mises en oeuvre afin d'offrir une continuité du service avec un accès non premium. Cette configuration dynamique de la séquence de fonctions réseaux élémentaires permet ainsi d'améliorer l'expérience client pour un service demandé. Il est souligné ici que dans les techniques de l'état de l'art, une séquence de fonctions réseaux élémentaires est prédéfinie pour un APN donné et ne peut être modifiée pendant le traitement d'un paquet. Le procédé permet de s'affranchir de cette contrainte.

Selon une caractéristique particulière la séquence est obtenue sur requête, par le noeud courant, auprès d'une entité de contrôle de fonctions réseaux élémentaires, la requête comprenant un identifiant du service.

L'obtention de la séquence auprès d'une entité de contrôle de fonctions réseaux élémentaires permet de centraliser et déléguer la gestion de cette mise à jour à une entité tierce. La mise en oeuvre du procédé par chaque noeud virtualisé est simplifiée.

Un noeud courant peut envoyer une requête comportant l'identifiant de service vers cette entité de contrôle pour demander une séquence de fonctions réseaux élémentaires.

Selon une caractéristique particulière le procédé de traitement comprend en outre une étape d'obtention auprès d'une entité de contrôle de fonctions réseaux élémentaires, d'une table de correspondance entre au moins un service et une séquence d'au moins une fonction réseau élémentaire pour traiter un paquet relatif à un service, lors de l'établissement d'une session utilisateur entre un terminal utilisateur et la passerelle d'interconnexion.

L'obtention d'une table de correspondance entre des services et des séquences de fonctions réseaux élémentaires à appliquer à des paquets relatifs à ces services lors de l'établissement de session (e.g. lors de la création d'un contexte PDP) permet de ne pas solliciter ultérieurement l'entité de contrôle de fonctions réseaux élémentaires. Il n'est pas nécessaire pour un noeud virtualisé d'envoyer une demande de séquence de fonctions réseaux élémentaires à l'entité de contrôle de fonctions réseaux élémentaires systématiquement suite à la détection d'un nouveau service. Les temps de réponse relatif à un service demandé sont améliorés.

Selon une caractéristique particulière la table de correspondance est déterminée par l'entité de contrôle de fonctions réseaux élémentaires en fonction d'un profil associé au terminal utilisateur.

Le profil associé à un terminal utilisateur permet de déterminer un ensemble de séquences de fonctions réseaux élémentaires à appliquer pour des services, en fonction d'informations de souscription relatives à un utilisateur de ce terminal utilisateur. Cela permet par exemple de prévoir certaines fonctions réseaux élémentaires en fonction de services auxquels l'utilisateur a souscrit.

Selon une caractéristique particulière le procédé comprend en outre une étape d'obtention auprès d'une entité de contrôle de noeuds virtualisés, d'une liste de noeuds virtualisés disponibles et aptes à mettre en oeuvre une fonction réseau élémentaire, et dans lequel le prochain noeud virtualisé est sélectionné à partir de ladite liste.

L'entité de contrôle de noeuds virtualisés dispose d'une vision globale de l'ensemble des noeuds virtualisés et des fonctions réseaux élémentaires qu'ils mettent en oeuvre, et plus particulièrement d'informations relatives à la disponibilité d'un noeud. La disponibilité d'un noeud virtualisé se réfère à sa capacité à être mobilisé rapidement pour mettre en oeuvre une fonction réseau élémentaire. Une liste de noeuds virtualisés aptes à mettre en oeuvre les fonctions réseaux élémentaires peut être obtenue à tout moment pendant le traitement du paquet.

Des noeuds virtualisés pour mettre en oeuvre de nouvelles fonctions réseaux élémentaires sont par ailleurs aisément configurés par l'entité de contrôle de noeuds virtualisés. L'accès à de nouveaux services ne nécessite aucune modification de l'infrastructure du réseau de l'opérateur de réseau de communication mobile.

La gestion des erreurs lors de la mise en oeuvre du procédé est en outre facilitée. Un nouveau noeud virtualisé apte à mettre en oeuvre une fonction réseau élémentaire peut en effet rapidement être configuré sans que la séquence de fonctions réseaux élémentaires à appliquer au paquet n'en soit par ailleurs affectée.

Selon une caractéristique particulière le procédé comprend également une étape d'envoi par le noeud virtualisé mettant en oeuvre la fonction courante, à une entité de contrôle de noeuds virtualisés, d'une notification indiquant un état de charge du noeud.

Le procédé permet de supporter des montées en charge des fonctions réseaux élémentaires. Le procédé permet de notifier l'entité de contrôle de noeuds virtualisés qui relaie l'information de surcharge auprès de noeuds virtualisés implémentant d'autres fonctions réseaux élémentaires. De nouveaux noeuds virtualisés peuvent être configurés afin de mettre en oeuvre la fonction réseau élémentaire d'un noeud virtualisé saturé, ou d'un noeud virtualisé ayant par exemple atteint un seuil de charge prédéfini. De tels noeuds peuvent alors ne pas être sollicités lors du traitement d'un prochain paquet de données relatif au service, lors de la sélection d'un noeud virtualisé pour mettre en oeuvre une fonction réseau élémentaire de la séquence. Le procédé permet en particulier de prévenir une congestion à l'entrée ou en sortie d'un noeud virtualisé.

Selon un deuxième aspect l'invention concerne un système de traitement d'un paquet, agencé pour traiter un paquet de données relatif à un service, le paquet étant acheminé par une passerelle d'interconnexion entre un réseau de communication mobile et un réseau de communication par paquets, à destination du réseau de communication par paquets, le système comprenant au moins un noeud virtualisé, ledit au moins un noeud virtualisé comprenant :
- un premier module d'obtention, agencé pour obtenir un identifiant du service auquel le paquet est relatif ;
- un deuxième module d'obtention, agencé pour obtenir à partir de l'identifiant de service, une séquence d'au moins une fonction réseau élémentaire pour traiter le paquet ;
et la première fonction de la séquence correspondant à la première itération à une fonction courante :
- un module de traitement, agencé pour appliquer la fonction courante au paquet en entrée pour obtenir un paquet en sortie ;
- un module de vérification, agencé pour vérifier s'il existe une fonction suivant la fonction courante dans la séquence ;
- un module de sélection, agencé pour, lorsqu'il existe une fonction suivant la fonction courante dans la séquence, sélectionner un prochain noeud virtualisé agencé pour mettre en oeuvre ladite fonction suivant la fonction courante dans la séquence, ladite fonction devenant alors fonction courante ;
- un module d'envoi, agencé pour, lorsqu'il existe une fonction suivant la fonction courante dans la séquence, envoyer un paquet en sortie à un noeud sélectionné par le module de sélection, le paquet en sortie devenant ainsi paquet en entrée pour l'application de la fonction courante et pour, lorsqu'il n'existe pas de fonction suivant la fonction courante dans la séquence, transmettre le paquet en sortie au réseau de communication par paquets.

Le système propose de tirer parti des avantages du modèle de l'informatique en nuage (« *cloud computing »* en anglais), en proposant une infrastructure en tant que service (ou *« Infrastructure as a Service »* en anglais) dans laquelle des noeuds virtualisés mettent en oeuvre l'ensemble des fonctions réseaux élémentaires d'un réseau de communication mobile. Une infrastructure en tant que service selon le modèle de l'informatique en nuage consiste à fournir un accès à un parc informatique virtualisé. L'infrastructure réseau de l'opérateur de réseau de communication mobile est ainsi dématérialisée. Le système proposé permet ainsi de mobiliser et mettre rapidement à disposition des fonctions réseaux élémentaires, tout en réduisant les coûts de maintenance lié à l'infrastructure du réseau.

Les avantages énoncés par ailleurs pour le procédé de traitement selon le premier aspect sont transposables directement au système selon le deuxième aspect.

Selon une caractéristique particulière, le système comprend également dans un plan usager :
- au moins un noeud virtualisé apte à mettre en oeuvre une fonction réseau élémentaire pour traiter le paquet relatif à un service ;
et dans un plan de contrôle :
- une entité de contrôle de fonctions réseaux élémentaires, agencée pour contrôler les fonctions réseaux élémentaires mises en oeuvre par des noeuds virtualisés appartenant au plan usager, comprenant :
   - un premier module de réception, agencé pour recevoir depuis un noeud virtualisé mettant en oeuvre une fonction réseau élémentaire pour traiter ledit paquet, une requête de séquence de fonctions réseaux élémentaires, ladite requête comprenant un identifiant du service ;
   - un module d'obtention, agencé pour obtenir la séquence d'au moins une fonction réseau élémentaire pour traiter le paquet à partir de l'identifiant du service ;
   - un module d'envoi, agencé pour envoyer à un noeud virtualisé, la séquence d'au moins une fonction réseau élémentaire pour traiter le paquet.

Selon une caractéristique particulière, le système comprend en outre une entité de contrôle de noeuds virtualisés, agencée pour contrôler ledit au moins un noeud virtualisé du plan usager, comprenant :
- un module de collecte, agencé pour collecter des informations de disponibilité d'au moins un noeud virtualisé, pour la mise en oeuvre d'une fonction réseau élémentaire ;
- un module d'envoi, agencé pour envoyer à un noeud virtualisé, une liste de noeuds virtualisés disponibles et aptes à mettre en oeuvre une fonction réseau élémentaire ;
- un module de mise à jour, agencé pour mettre à jour une liste de noeuds virtualisés disponibles et aptes à mettre en oeuvre une fonction réseau élémentaire, le module d'envoi étant alors également agencé pour envoyer une mise à jour de la liste.

Selon une caractéristique particulière, l'entité de contrôle de fonctions réseaux élémentaires comprend en outre :
- un deuxième module de réception, agencé pour recevoir depuis la passerelle d'interconnexion 10, des informations relatives à un contexte partagé entre un terminal utilisateur ayant émis le paquet de données et la passerelle d'interconnexion. Le module d'envoi de l'entité de contrôle de fonctions réseaux élémentaires étant alors également agencé pour envoyer au moins une table mémorisant au moins une association entre un service et une séquence d'au moins une fonction réseau élémentaire, à un noeud virtualisé, lors de l'établissement d'une session utilisateur entre un terminal utilisateur et la passerelle d'interconnexion.

Selon une caractéristique particulière, l'entité de contrôle de fonctions réseaux élémentaires comprend en outre :
- un module d'envoi/réception agencé pour obtenir un profil utilisateur associé au terminal utilisateur ayant émis le paquet de données. Le module d'obtention de l'entité de contrôle de fonctions réseaux élémentaires est alors également agencé pour obtenir la séquence d'au moins une fonction réseau élémentaire à partir dudit profil utilisateur.

Selon une caractéristique particulière, l'entité de contrôle de noeuds virtualisés comprend en outre un module de réception, agencé pour recevoir depuis un noeud virtualisé mettant en oeuvre une fonction réseau élémentaire, une notification indiquant un état de saturation du noeud, le noeud étant susceptible de ne plus être apte à mettre en oeuvre la fonction réseau élémentaire lors du traitement d'un prochain paquet de données relatif au service.

Selon un troisième aspect, l'invention concerne également un programme pour une entité de contrôle de fonctions réseaux élémentaires, comprenant des instructions de code de programme destinées à commander l'exécution des étapes du procédé précédemment décrit mises en oeuvre par une entité de contrôle de fonctions réseaux élémentaires, lorsque ledit programme est exécuté par l'entité de contrôle de fonctions réseaux élémentaires et un support d'enregistrement lisible par une entité de contrôle de fonctions réseaux élémentaires sur laquelle est enregistré un programme pour une entité de contrôle de fonctions réseaux élémentaires.

L'invention sera mieux comprise à l'aide de la description suivante de modes de réalisation particuliers, en référence aux dessins annexés sur lesquels :
- la figure 1 représente un système de traitement d'un paquet relatif à un service selon un mode particulier de réalisation ;
- les figures 2a et 2b représentent des tables mémorisant des noeuds virtualisés disponibles et aptes à mettre en oeuvre des fonctions réseaux élémentaires selon un mode particulier de réalisation ;
- la figure 3 représente les étapes du procédé de traitement selon un mode particulier de réalisation ;
- la figure 4 représente les échanges entre les entités d'un système de traitement d'un paquet relatif à un service en cas d'indisponibilité d'un noeud du système, selon un mode particulier de réalisation ;
- la figure 5 représente un noeud virtualisé d'un système de traitement d'un paquet relatif à un service selon un mode particulier de réalisation ;
- la figure 6 représente une entité de contrôle de fonctions réseaux élémentaires selon un mode particulier de réalisation ;
- la figure 7 représente une entité de contrôle de noeuds virtualisés selon un mode particulier de réalisation ;

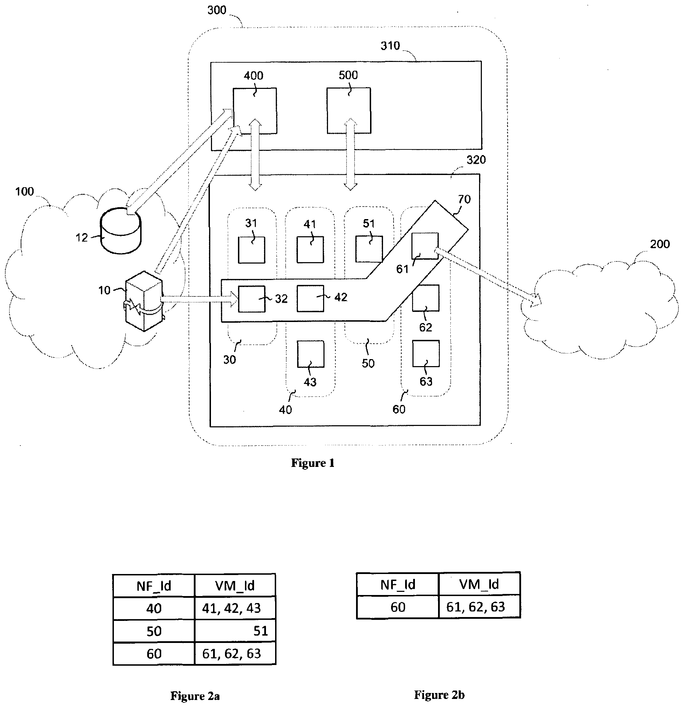

La **figure 1** représente un système 300 de traitement d'un paquet relatif à un service selon un mode particulier de réalisation. Le système propose plus particulièrement une infrastructure en tant que service dans laquelle des noeuds virtualisés mettent en oeuvre un ensemble des fonctions réseaux élémentaires d'un réseau de communication mobile 100.

Les fonctions réseaux élémentaires correspondent à des fonctions fournies par l'opérateur du réseau de communication mobile 100 pour traiter un paquet de données émis depuis une passerelle d'interconnexion vers un réseau 200 d'un fournisseur de service non géré par l'opérateur de réseau de communication mobile. Il s'agit à titre d'exemple de services de traduction d'adresses réseaux, de pare-feu, de services de répartition de charge, de transcodage, de mise en cache, d'optimisation de requête, ou encore d'enrichissement de paquets réseaux.

Le paquet à traiter est reçu en entrée du système 300 depuis une passerelle d'interconnexion 10 localisée dans un réseau de communication mobile 100. Cette passerelle d'interconnexion est à titre d'exemple non limitatif une passerelle GGSN ou une passerelle P-GW. Le système 300 est indifféremment localisé dans le réseau 100 ou à l'extérieur de ce réseau 100. Dans ce dernier cas, l'opérateur du réseau de communication mobile utilise des ressources externes à son réseau pour traiter le paquet.

Le système 300 comprend plus spécifiquement des entités appartenant à un plan de contrôle 310 et les noeuds virtualisés appartenant à un plan usager 320. Le plan de contrôle 310 comprend lui-même une entité de contrôle de fonctions réseaux élémentaires 400 et une entité de contrôle de noeuds virtualisés 500. L'entité de contrôle de fonctions réseaux élémentaires 400 et l'entité de contrôle de noeuds virtualisés 500 sont des équipements dédiés (e.g. serveur). Dans un autre mode de réalisation ces entités sont des modules intégrés à un équipement du réseau de l'opérateur de réseau de communication mobile (e.g. passerelle d'interconnexion, routeur).

L'entité de contrôle de fonctions réseaux élémentaires 400 est agencée pour associer des séquences de fonctions réseaux élémentaires mises en oeuvre par les noeuds virtualisés appartenant au plan usager 320. Plus particulièrement, un équipement physique est configuré pour supporter des équipements noeuds virtualisés. Le fonctionnement d'un équipement noeud virtualisé est simulé à l'aide de logiciels sur l'équipement physique. L'entité de contrôle de fonctions réseaux élémentaires 400 détermine et fournit aux noeuds virtualisés du plan usager 320 les séquences de fonctions réseaux élémentaires à appliquer à un paquet de données. Les séquences à appliquer à un paquet sont plus particulièrement déterminées en fonction d'informations relatives à un contexte partagé entre un terminal utilisateur (e.g. téléphone portable, ordinateur portable, tablette) et la passerelle d'interconnexion 10, et d'informations de souscription d'un utilisateur d'un terminal utilisateur ayant émis ce paquet.

Les informations relatives à un contexte (e.g. contexte PDP ou connexion « EPS bearer ») sont reçues par l'entité de contrôle de fonctions réseaux élémentaires 400 à partir de la passerelle d'interconnexion 10. Le contexte comprend des informations relatives au terminal telles qu'un identifiant IMSI pour « *International Mobile Subscriber Identity* », un type d'accès réseaux (e.g. 2G ou 3G), ou encore des informations de qualité de service. Un ensemble de séquences de fonctions réseaux élémentaires à appliquer à des paquets de données émis par le terminal utilisateur peut ainsi être déterminé en fonction d'une adresse IP (pour « *Internet Protocol* ») attribuée au terminal utilisateur dans le réseau de communication mobile 100, du type d'accès réseaux, d'informations de qualité de service, ou encore d'une combinaison de ces différents critères.

Les informations de souscription sont par exemple obtenues par l'entité de contrôle de fonctions réseaux élémentaires auprès d'une base de données 12 de profils utilisateurs (e.g équipement HSS pour « *Home Subscriber Server* ») localisée dans le réseau de communication mobile 100. Ces informations comprennent notamment une liste de services auxquels l'utilisateur est abonné. Un ensemble de séquences de fonctions réseaux élémentaires prédéfini par l'opérateur du réseau de communication mobile 100 peut ainsi être déterminé pour les services auxquels l'utilisateur est abonné.

L'entité de contrôle de noeuds virtualisés 500 gère quant à elle les noeuds virtualisés pour la mise en oeuvre des fonctions réseaux élémentaires. L'entité de contrôle de noeuds virtualisés 500 obtient des informations en temps réel sur les noeuds virtualisés du plan usager. Ces informations concernent par exemple la disponibilité des noeuds virtualisés pour mettre en oeuvre une fonction réseau élémentaire ou encore un état de charge de chaque noeud virtualisé.

Dans un mode de réalisation particulier, l'entité de contrôle de noeuds virtualisés 500 communique ces informations à l'entité de contrôle de fonctions réseaux élémentaires 400. L'entité de contrôle de fonctions réseaux élémentaires 400 est ainsi informée des disponibilités des noeuds virtualisés pour mettre en oeuvre une fonction réseau élémentaire donnée.

Le plan de contrôle 310 assure donc un contrôle sur les noeuds virtualisés 31-32, 41-43, 51, 61-63 du plan usager 320. Ces noeuds virtualisés 31-32, 41-43, 51, 61-63 mettent en oeuvre des fonctions réseaux élémentaires 30, 40, 50, 60, à appliquer sur un paquet en fonction d'un service auquel le paquet se rapporte. Plus précisément, la fonction réseau élémentaire 30 est mise en oeuvre par les noeuds virtualisés 31, 32 ; la fonction réseau élémentaire 40 par les noeuds virtualisés 41, 42, 43 ; la fonction réseau élémentaire 50 par le noeud 51 ; et la fonction réseau élémentaire 60 par les noeuds virtualisés 61, 62, 63. La fonction réseau élémentaire 30 permet par exemple de faire de la répartition de charge, la fonction réseau élémentaire 40 est un service de pare-feu, et la fonction réseau élémentaire 50 permet de faire de l'enrichissement de paquets. La fonction réseau élémentaire 60 permet par exemple de faire de la traduction d'adresse réseau. On suppose ici que le paquet est relatif à un service d'accès à Internet fourni par le réseau de communication par paquets 200. L'accès au service nécessite en particulier l'application sur le paquet de plusieurs fonctions réseaux élémentaires dans un ordre particulier. On suppose dans le mode de réalisation décrit que l'opérateur du réseau de communication mobile a configuré pour un service d'accès à Internet, les fonctions réseaux élémentaires suivantes : répartition de charge entre plusieurs services de pare-feu, puis traduction d'adresse réseau. Les fonctions réseaux élémentaires 30, 40 et 60, sont alors appliquées successivement aux paquets relatifs au service d'accès à Internet afin d'y accéder. Ces fonctions réseaux élémentaires 30, 40 et 60 forment une séquence 70 de fonctions réseaux élémentaires mises en oeuvre respectivement par les noeuds virtualisées 32, 42 et 61, et à appliquer au paquet reçu en entrée du système 300.

Seules quatre fonctions réseaux élémentaires sont représentées dans le plan usager, il n'existe cependant pas de limitation quant au nombre de fonctions réseaux élémentaires mises en oeuvre dans le plan usager 320. De même seuls neuf noeuds virtualisés sont représentés dans le plan usager, il n'existe cependant pas de limitation quant au nombre de noeuds virtualisés appartenant à ce plan.

L'association entre une fonction réseau élémentaire et les noeuds virtualisés disponibles la mettant en oeuvre est mémorisée par chaque noeud virtualisé dans une table NVAT. Cette table va maintenant être décrite en relation les **figures 2a et 2b****.** Plus précisément, la table NVAT d'un noeud virtualisé V mémorise les noeuds virtualisés aptes à mettre en oeuvre les fonctions réseaux élémentaires qui, dans une séquence, suivent la fonction réseau élémentaire mise en oeuvre par ce noeud V. A titre d'exemple, on suppose dans ce mode de réalisation que trois séquences de fonctions réseaux élémentaires ont été prédéfinies par l'opérateur du réseau de communication mobile 100 : les séquences de fonctions réseaux élémentaires 30-40-60, 30-50-60 et 30-60. La **figure 2a** représente le contenu d'une table NVAT mémorisée par les noeuds virtualisés 31 et 32 qui mettent en oeuvre la fonction réseau élémentaire 30. Chaque ligne de cette table NVAT est constituée d'un identifiant d'une fonction réseau élémentaire en association avec une liste de noeuds virtualisés disponibles et aptes à la mettre en oeuvre. Dans les séquences de fonctions réseaux élémentaires 30-40-60, 30-50-60 et 30-60, les fonctions réseaux élémentaires qui suivent immédiatement la fonction réseau élémentaire 30 sont les fonctions réseaux élémentaires 40, 50 et 60. Le contenu de la table NVAT pour les noeuds 31 et 32 qui mettent en oeuvre la fonction réseau élémentaire 30, comprend donc une ligne pour chaque fonction réseau élémentaire 40, 50 et 60. La première ligne indique que les noeuds virtualisés 41, 42 et 43 sont disponibles et aptes à mettre en oeuvre la fonction réseau élémentaire 40. La deuxième ligne indique que le noeud virtualisé 51 est disponible et apte à mettre en oeuvre la fonction réseau élémentaire 50. Et la dernière ligne indique que les noeuds virtualisés 61, 62 et 63 sont disponibles et aptes à mettre en oeuvre la fonction réseau élémentaire 60. De même, dans les trois séquences 30-40-60, 30-50-60 et 30-60, les fonctions réseaux élémentaires 40 et 50 sont suivies de la fonction réseau élémentaire 60. La table NVAT, telle que décrite en relation avec la **figure 2b****,** pour les noeuds virtualisés mettant en oeuvre les fonctions réseaux élémentaires 40 et 50 comprend donc une seule ligne indiquant que les noeuds virtualisés 61, 62 et 63 sont disponibles et aptes à mettre en oeuvre la fonction réseau élémentaire 60. Les tables sont mises à jour dynamiquement par l'entité de contrôle de noeuds virtualisés 500 en fonction des informations collectées par cette dernière. Des noeuds virtualisés peuvent aisément être configurés ou dé-configurés par l'entité de contrôle de noeuds virtualisés 500 en fonction par exemple d'un état de charge constaté pour une fonction réseau élémentaire. De nouveaux noeuds sont ainsi configurés pour mettre en oeuvre une fonction réseau élémentaire lorsque les noeuds la mettant déjà en oeuvre ne suffisent plus à traiter l'ensemble des paquets sur lequel la fonction est appliquée. Les tables NVAT comprenant une fonction réseau élémentaire mise en oeuvre par un noeud virtualisé saturé sont par exemple mises à jour par diffusion d'un message de mise à jour par l'entité de contrôle de noeuds virtualisés 500. Le noeud virtualisé saturé est alors supprimé ou remplacé dans ces tables NVAT par un nouveau noeud.

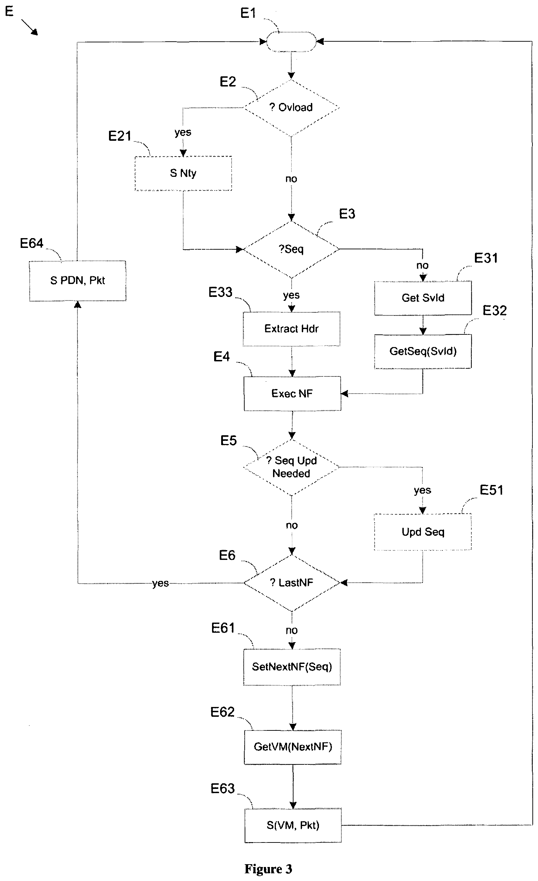

La **figure 3** représente les étapes du procédé de traitement d'un paquet relatif à un service selon un mode particulier de réalisation.

Un noeud virtualisé courant du système 300 est lors d'une étape E1 en attente d'un paquet de données. Le procédé débute avec la réception d'un paquet de données P relatif à un service depuis la passerelle d'interconnexion 10.

Lors d'une étape E2, le noeud courant vérifie un état de charge donnant une indication sur les ressources de calculs qu'il utilise.

Lorsque cet état de charge (e.g. charge processeur) dépasse un seuil, correspondant par exemple à un état de pré-congestion, une notification est envoyée lors d'une étape E21 à une entité de contrôle de noeuds virtualisés 500. Cette notification permet à l'entité de contrôle de noeuds virtualisés de supprimer ce noeud virtualisé saturé de la table NVAT des autres noeuds virtualisés pour le traitement de prochains paquets de données. De nouveaux noeuds virtualisés peuvent également être créés pour mettre en oeuvre la fonction élémentaire et ajoutés dans la table NVAT des autres noeuds virtualisés Les noeuds virtualisés pour lesquels une modification de la table NVAT est réalisée comprennent par exemple la totalité des autres noeuds virtualisés ou uniquement les noeuds virtualisés mettant en oeuvre une fonction réseau élémentaire précédent la fonction réseau élémentaire mise en oeuvre par le noeud saturé. L'étape E21 est ensuite suivie par l'étape E3.

Dans le cas où l'état de charge ne dépasse pas le seuil, le procédé passe directement de l'étape E2 à l'étape E3.

Lors de l'étape E3, le noeud courant vérifie que le paquet de données P comprend un entête contenant une séquence de fonctions réseaux élémentaires.

Lorsque le paquet de données ne contient pas un tel entête, le noeud courant analyse, lors d'une étape E31, le paquet de données P reçu afin d'identifier un service auquel se rapporte le paquet. Cette analyse utilise par exemple une technique d'inspection des paquets en profondeur (*Deep Packet Inspection* en anglais). Le service identifié est par exemple un service Voix sur IP.

Dans une étape E32, le noeud courant obtient une séquence de fonctions réseaux élémentaires à appliquer au paquet P en fonction du service identifié à l'étape E31. Le noeud courant envoie pour cela une requête comprenant un identifiant du service à l'entité de contrôle de fonctions réseaux élémentaires 400. L'entité de contrôle de fonctions réseaux élémentaires 400 retourne alors la séquence au noeud courant. Cette séquence est fournie sous la forme d'une liste d'identifiant de fonctions réseaux élémentaires, ou encore sous la forme d'un identifiant d'une liste de fonctions réseaux élémentaires permettant d'obtenir une liste de fonctions réseaux élémentaires préalablement configurée par l'opérateur du réseau de communication mobile 100 au niveau des noeuds virtualisés.

Dans un autre mode de réalisation, l'association entre un service et une séquence de fonctions réseaux élémentaires est fournie par une entité tierce lors de la création d'une session utilisateur entre un terminal utilisateur et une passerelle d'interconnexion 10 (e.g. création d'un contexte PDP, ou d'une connexion « EPS bearer »). Cette entité est par exemple l'entité de contrôle de fonctions de réseaux élémentaires 400. Le délai introduit par l'échange avec l'entité de contrôle de fonctions réseaux élémentaires 400 peut ainsi être réduit.

Une fois la séquence de fonctions réseaux élémentaires obtenue à l'étape E32, le procédé passe à une étape E4.

Lorsqu'à l'étape E3 l'entête du paquet comprend déjà une séquence de fonctions réseaux élémentaires, le procédé passe à une étape E33, lors de laquelle le noeud courant extrait l'entête du paquet et le mémorise, avant de passer à l'étape E4.

A l'étape E4, le noeud courant dispose d'une séquence de fonctions réseaux élémentaires pour le service auquel se rapporte le paquet P. A titre d'exemple, cette séquence S est constituée des fonctions réseaux élémentaires 30, 40 et 60, décrites précédemment en relation avec la figure 1. Le noeud courant met alors en oeuvre sa fonction réseau élémentaire en tant que fonction courante sur le paquet.

Dans une étape E5, le noeud courant vérifie si suite à l'application de la fonction courante, une mise à jour de la séquence de fonctions réseaux élémentaires est nécessaire. Une nouvelle séquence de fonctions réseaux élémentaires peut par exemple avantageusement être obtenue en fonction du résultat de l'application de la fonction courante sur le paquet de données P à l'étape E4. Dans le cas par exemple d'une fonction réseau élémentaire chargée du décompte de facturation d'un terminal utilisateur souhaitant accéder à un service pour lequel un utilisateur du terminal n'a plus de crédit, une nouvelle séquence de fonctions réseaux élémentaires peut être obtenue afin de rediriger le trafic utilisateur vers un autre service (e.g. portail de rechargement).

Cette mise à jour est réalisée lors d'une étape E51, par remplacement ou modification de la séquence de fonctions réseaux élémentaires obtenue à l'étape E32, ou le cas échéant de la séquence mémorisée à l'étape E33. Les expressions « nouvelle séquence » et « séquence mise à jour » peuvent donc être indifféremment utilisées dans la suite de la description. L'obtention d'une nouvelle séquence de fonctions réseaux élémentaires est réalisée selon l'un des différents modes de réalisation décrits précédemment pour la mise en oeuvre de l'étape E32.

Une étape E6 suit ensuite l'étape E51 ou est directement mise en oeuvre après l'étape E5 lorsqu'aucune mise à jour de la séquence n'est nécessaire. Lors de cette étape E6, le noeud courant vérifie si la fonction courante est la dernière fonction réseau élémentaire de la séquence.

Lorsque la fonction courante n'est pas la dernière fonction réseau élémentaire de la séquence, le noeud courant met à jour la séquence de fonctions réseaux élémentaires lors d'une étape E61. Pour cela le noeud courant supprime la première fonction réseau élémentaire de la séquence. La nouvelle séquence comprend uniquement les fonctions réseaux élémentaires qui n'ont pas encore été appliquées sur le paquet, et la fonction courante correspond alors à la prochaine fonction réseau élémentaire à mettre en oeuvre. Un entête comprenant la nouvelle séquence est alors ajouté au paquet de données P.

Dans un autre mode de réalisation, à l'étape E61, la séquence n'est pas modifiée, et la fonction courante est désignée par un pointeur permettant d'indiquer la prochaine fonction réseau élémentaire de la séquence à mettre en oeuvre. L'entête ajouté au paquet de données à l'étape E61 comprend alors également ce pointeur. Un noeud virtualisé auquel le paquet de données est transmis ultérieurement peut ainsi disposer d'un historique des fonctions réseaux élémentaires mises en oeuvre.

Lors d'une étape E62, le noeud courant consulte sa table NVAT qui lui permet de sélectionner un prochain noeud virtualisé, pour mettre en oeuvre la prochaine fonction. La sélection du prochain noeud virtualisé peut être aléatoire ou suivre une politique particulière définie par l'opérateur du réseau de communication mobile. On suppose ici que cette sélection est aléatoire.

Lors d'une étape E63, le paquet de données P est envoyé au noeud sélectionné à l'étape E62 pour mettre en oeuvre la prochaine fonction.

Le noeud virtualisé devient à son tour « noeud courant » lorsqu'il reçoit le paquet de données P. Les étapes du procédé seront alors répétées par ce nouveau noeud courant, et le paquet de données P transmis de noeud en noeud jusqu'à ce que l'ensemble des fonctions de la séquence ait été appliqué. Il est par ailleurs souligné que le noeud virtualisé repasse à l'étape E1, en attente d'un nouveau paquet de données à traiter, lorsque le paquet a été transmis lors de l'étape E63 au prochain noeud.

A l'étape E6, lorsque la fonction courante est la dernière fonction réseau élémentaire de la séquence, le noeud courant transmet, lors d'une étape E64, le paquet vers le réseau de communication par paquets 200 fournissant le service auquel se rapporte ce paquet. Ceci met fin au traitement du paquet de données P. Le noeud virtualisé se remet alors en attente d'un prochain paquet de données (étape E1).

Il n'existe pas de limitation quant au protocole de communication utilisé pour l'envoi du paquet d'un noeud virtualisé à un autre noeud virtualisé. Ces protocoles de communications sont par exemples les protocoles HTTP (pour *Hypertext Transfer Protocol*), FTP (pour *File Transfer Protocol*), etc.

Les étapes E2 et E21 peuvent par ailleurs être réalisées consécutivement à toute autre étape du procédé. Il est ainsi possible de contrôler l'état de charge d'un noeud à différents instants du procédé.

Les étapes E5 et E51 sont utilisées uniquement si la modification de séquence est envisagée par un opérateur de réseau de communication mobile.

Le procédé a été décrit avec une mise en oeuvre reposant sur des tables pour représenter les associations entre services, séquences, fonctions réseaux élémentaires et noeuds virtualisés. Il n'existe cependant aucune limitation quant aux structures de données utilisées pour la mise en oeuvre du procédé.

Il est également souligné que le procédé peut aussi bien s'appliquer au traitement de paquets de données de flux émis depuis la passerelle d'interconnexion 10 vers le réseau de communication par paquets 200, qu'au traitement de paquets de données de flux émis depuis le réseau de communication par paquets 200 vers la passerelle d'interconnexion 10. Dans ce dernier cas le noeud virtualisé d'entrée est adapté pour recevoir des paquets de données depuis le réseau de communication par paquets 200.

Un exemple de mise en oeuvre du procédé pour le traitement d'un paquet relatif à un service d'accès à Internet va maintenant être décrit.

Le procédé débute avec la réception d'un paquet de données P relatif au service d'accès à Internet par un noeud courant 32 lors de l'étape E1.

Le noeud courant n'étant pas saturé (étape E2), il vérifie à l'étape E3 si le paquet de données P comporte un entête comprenant une séquence de fonctions réseaux élémentaires.

Le paquet de données P ne comportant pas d'entête comprenant une séquence de fonctions réseaux élémentaires, le noeud courant 32 analyse lors de l'étape E31 le paquet de données P reçu et identifie que le service auquel se rapporte le paquet est un service d'accès à Internet.

A l'étape E32, le noeud courant obtient une séquence de fonctions réseaux élémentaires S = {30 ; 40 ; 60} à appliquer au service identifié à l'étape E31. Cette séquence est mémorisée par le noeud courant 32.

A l'étape E4, le noeud courant 32 met en oeuvre la fonction courante 30 sur le paquet.

Lors de l'étape E5, aucune modification de la séquence S n'est nécessaire suite à l'application de fonction courante 30.

Le noeud courant 32 vérifie alors lors de l'étape E6 si la fonction courante 30 est la dernière fonction réseau élémentaire de la séquence S. La fonction réseau élémentaire 30 n'étant pas la dernière de la séquence S, le noeud virtualisé 32 met à jour la séquence de fonctions réseaux élémentaires lors de l'étape E61. Pour cela le noeud virtualisé 32 supprime la première fonction réseau élémentaire de la séquence, la nouvelle séquence est donc S = {40 ; 60}. Le noeud courant 32 ajoute au paquet traité un entête constitué de l'identifiant du service d'accès Internet et de la séquence S de fonctions réseaux élémentaires à appliquer au paquet. La fonction courante, première fonction réseau élémentaire de la séquence S, est maintenant la fonction réseau élémentaire 40.

Lors de l'étape E62, le noeud courant 32 consulte sa table NVAT. La table NVAT indique trois noeuds virtualisés disponibles et aptes à mettre en oeuvre la fonction courante 40 : les noeuds virtualisés 41, 42 et 43. La sélection du noeud pour mettre en oeuvre la fonction courante 40, ou noeud courant, est aléatoire. Le noeud virtualisé 42 est sélectionné en tant que noeud courant.

Lors de l'étape E63, le paquet est envoyé au noeud courant 42 sélectionné à l'étape E62. Le noeud virtualisé 32 se remet en attente d'un prochain paquet de données à traiter.

Le noeud virtualisé 42 devient à son tour noeud courant, et les étapes E1 à E63 sont réitérées par ce dernier noeud.

Le paquet de données P est alors reçu par le noeud courant 42 lors de l'étape E1.

Le noeud courant n'étant pas saturé, il vérifie à l'étape E3 si le paquet de données P comporte un entête comprenant une séquence de fonctions réseaux élémentaires.

Le paquet de données P comportant un entête comprenant la séquence S = {40 ; 60}, le noeud courant 42 extrait l'entête comportant la séquence S lors de l'étape E33, le mémorise et met en oeuvre, lors de l'étape E4, la fonction courante 40.

Lors de l'étape E5, aucune modification de la séquence S n'est nécessaire suite à l'application de fonction courante 40.

Le noeud courant 42 vérifie alors lors de l'étape E6 si la fonction courante 40 est la dernière fonction réseau élémentaire de la séquence S. La fonction réseau élémentaire 40 n'étant pas la dernière de la séquence S, le noeud virtualisé 42 met à jour la séquence de fonctions réseaux élémentaires lors de l'étape E61. Pour cela le noeud virtualisé 42 supprime la première fonction réseau élémentaire de la séquence, la nouvelle séquence est donc S = {60}. Le noeud courant 42 ajoute au paquet traité un entête constitué de l'identifiant du service d'accès Internet et de la séquence S de fonctions réseaux élémentaires à appliquer au paquet. La fonction courante, première fonction réseau élémentaire de la séquence S, est maintenant la fonction réseau élémentaire 60.

Lors de l'étape E62, le noeud courant 42 consulte sa table NVAT. La table NVAT indique trois noeuds virtualisés disponibles et aptes à mettre en oeuvre la fonction courante 60 : les noeuds virtualisés 61, 62 et 63. La sélection du noeud pour mettre en oeuvre la fonction courante 60, ou noeud courant, est aléatoire. Le noeud virtualisé 61 est sélectionné en tant que noeud courant.

Lors de l'étape E63, le paquet est envoyé au noeud courant 61 sélectionné à l'étape E62. Le noeud virtualisé 42 se remet en attente d'un prochain paquet de données à traiter.

Le noeud virtualisé 61 devient à son tour noeud courant, et les étapes E1 à E63 sont réitérées par ce dernier noeud.

Le paquet de données P est alors reçu par le noeud courant 61 lors de l'étape E1.

Le noeud courant n'étant pas saturé, il vérifie à l'étape E3 si le paquet de données P comporte un entête comprenant une séquence de fonctions réseaux élémentaires. Le paquet de données P comportant un entête comprenant la séquence S = {60}, le noeud courant 61 extrait l'entête comportant la séquence S lors de l'étape E33, le mémorise et met en oeuvre, lors de l'étape E4, la fonction courante 60.

Lors de l'étape E5, aucune modification de la séquence S n'est nécessaire suite à l'application de fonction courante 60.

Le noeud courant 61 vérifie alors lors de l'étape E6 si la fonction courante 60 est la dernière fonction réseau élémentaire de la séquence S. La fonction réseau élémentaire 60 étant la dernière de la séquence S, le noeud virtualisé 61 transmet (E64) le paquet de données P vers le réseau de communication par paquets fournissant le service demandé, et le noeud virtualisé 61 se remet en attente d'un prochain paquet de données à traiter.

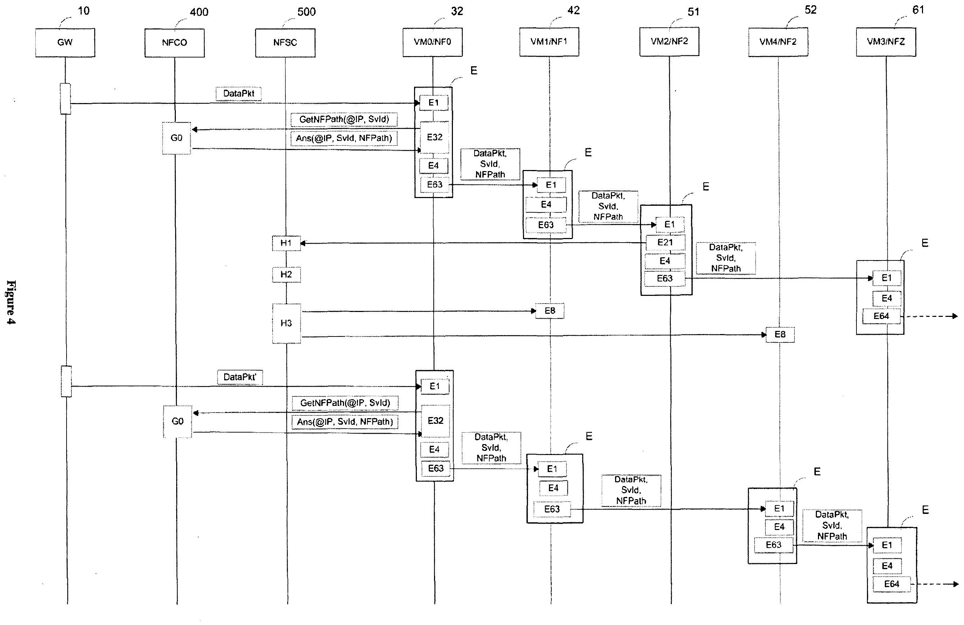

Les échanges entre les entités d'un système de traitement d'un paquet de données relatif à un service en cas d'indisponibilité d'un noeud du système 300, selon un mode particulier de réalisation vont maintenant être décrits en relation avec la **figure 4****.**

Lors d'une étape E1, un noeud virtualisé 32 mettant en oeuvre une fonction réseau élémentaire 30 reçoit un paquet de données relatif à un service en provenance de la passerelle d'interconnexion 10.

Dans une étape E32, le noeud virtualisé 32 obtient une séquence de fonctions réseaux élémentaires à appliquer au paquet en fonction du service auprès d'une entité de contrôle de fonctions réseaux élémentaires 400. Le noeud virtualisé d'entrée 32 envoie pour cela une requête comprenant un identifiant du service, à l'entité de contrôle de fonctions réseaux élémentaires 400. L'entité de contrôle de fonctions réseaux élémentaires 400 retourne alors, lors d'une étape G0, la séquence au noeud virtualisé d'entrée 32. La séquence retournée est à titre d'exemple une séquence constituée des fonctions réseaux élémentaires 40, 50 et 60, S = {40 ; 50 ; 60}. Dans une étape E4, le noeud virtualisé d'entrée 32 met en oeuvre la fonction réseau élémentaire 30 sur le paquet.

Lors d'une étape E63, le paquet de données est envoyé au noeud virtualisé 42 sélectionné à l'étape E62 pour mettre en oeuvre la fonction réseau élémentaire 40.

Le paquet de données est reçu par le noeud virtualisé 42 dans une étape E1. Le noeud virtualisé met alors en oeuvre lors d'une étape E4 la fonction réseau élémentaire 40. Puis il transmet à son tour, lors d'une étape E63 le paquet de données au noeud virtualisé 51 sélectionné pour mettre en oeuvre la fonction réseau élémentaire 50.

Le noeud virtualisé 51 reçoit à sont tour dans une étape E1 le paquet de données.

Dans une étape E21, un seuil de charge de calcul indiquant que le noeud virtualisé 51 ne peut pas mettre en oeuvre sa fonction réseau élémentaire pour traiter un prochain paquet de données est atteint. Le noeud virtualisé 51 le notifie alors à une entité de contrôle de noeuds virtualisés 500.

L'entité de contrôle de noeuds virtualisés 500 reçoit la notification lors d'une étape H1 et détermine dans une étape H2 s'il y a besoin de créer un nouveau noeud virtualisé pour mettre en oeuvre la fonction réseau élémentaire 50. A titre d'exemple le noeud virtualisé 52 est créé pour mettre en oeuvre la fonction réseau élémentaire 50. Dans une étape H3, l'entité de contrôle de noeuds virtualisés 500 transmet alors aux noeuds virtualisés dont la table NVAT comporte une référence vers le noeud virtualisé 51, à titre d'exemple les noeuds virtualisés 41, 42 et 43, un message de mise à jour de leur table NVAT.

Dans une étape E8, les noeuds virtualisés 41, 42 et 43 reçoivent le message de mise à jour de leur table NVAT. Les noeuds virtualisés 41, 42 et 43 remplacent alors la référence vers le noeud virtualisé 51 par une référence vers le noeud virtualisé 52.

Parallèlement à la mise à jour des tables NVAT, le traitement du paquet de données continue. Dans une étape E4, le noeud virtualisé d'entrée 51 met en oeuvre la fonction réseau élémentaire 50 sur le paquet. Puis le transmet au noeud virtualisé 61 lors d'une étape E63.

Ce dernier noeud virtualisé 61 reçoit le paquet de données dans une étape E1, met en oeuvre lors d'une étape E4 la fonction réseau élémentaire 60 sur le paquet, puis le transmet lors d'une dernière étape E64 vers un réseau de communication par paquets 200.

Lorsqu'un deuxième paquet de données relatif au même service est reçu par le noeud virtualisé 32, les étapes du procédé mises en oeuvre par les noeuds virtualisés 32, 42 et 61 restent identiques à ce qui a été décrit précédemment, à ceci près que lorsque le noeud virtualisé 42 reçoit ce deuxième paquet de données à l'étape E1, le paquet est transmis en fin de traitement au noeud virtualisé 52. C'est ce dernier noeud virtualisé 52 qui applique alors la fonction courante 50 sur le paquet de données avant de le transmettre au noeud virtualisé 61. La fonction courante 50 dispose ainsi de ressources suffisantes pour continuer à être mise en oeuvre.

Dans un autre mode de réalisation, aucune notification n'est envoyée lorsqu'un noeud virtualisé atteint un certain niveau de charge. La disponibilité des noeuds virtualisés pour mettre en oeuvre une fonction réseau élémentaire est vérifiée par l'entité de contrôle de noeuds virtualisés 500 par l'envoi d'un message (e.g. messages dit « *KeepAlive* ») à intervalles réguliers aux noeuds virtualisés. Les noeuds virtualisés répondent ainsi en envoyant un état de leur charge actuelle. Lorsqu'un noeud virtualisé ne répond pas à l'un de ces messages, il est considéré ne plus être disponible pour la mise en oeuvre de sa fonction réseau élémentaire.

Dans un autre mode de réalisation, les séquences de fonctions réseaux élémentaires par type de service sont fournies par l'entité de contrôle de fonctions réseaux élémentaires 400 pendant la création de la session utilisateur (e.g. PDP Context, EPS bearer). L'étape E32 correspond alors à une obtention de la séquence relative au service identifié mémorisée localement par le noeud virtualisé lors de la création de la session utilisateur.

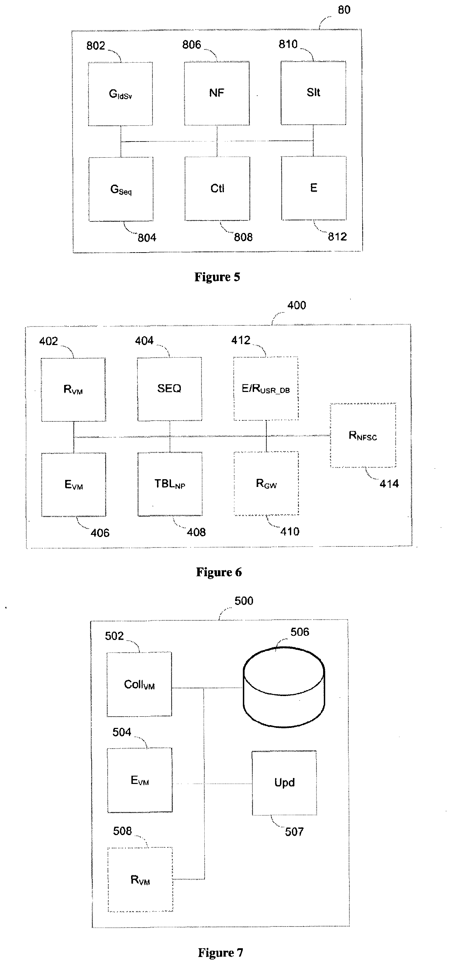

La **figure 5** représente un noeud virtualisé 80 d'un système 300 de traitement d'un paquet relatif à un service selon un mode particulier de réalisation. Un tel noeud virtualisé 80 comprend :
- un premier module d'obtention 802, agencé pour obtenir un identifiant du service auquel le paquet est relatif ;
- un deuxième module d'obtention 804, agencé pour obtenir à partir de l'identifiant de service, une séquence d'au moins une fonction réseau élémentaire pour traiter ledit paquet ;
   et la première fonction de la séquence correspondant à la première itération à une fonction courante :
- un module de traitement 806, agencé pour appliquer la fonction courante au paquet en entrée pour obtenir un paquet en sortie ;
- un module de vérification 808, agencé pour vérifier s'il existe une fonction suivant la fonction courante dans la séquence,
   et le cas échéant,
- un module de sélection 810, agencé pour, lorsqu'il existe une fonction suivant la fonction courante dans la séquence, sélectionner un prochain noeud virtualisé agencé pour mettre en oeuvre ladite fonction suivant la fonction courante dans la séquence, ladite fonction devenant alors fonction courante ;
- un module d'envoi 812, agencé pour, lorsqu'il existe une fonction suivant la fonction courante dans la séquence, envoyer un paquet en sortie à un noeud sélectionné par le module de sélection 810, le paquet en sortie devenant ainsi paquet en entrée pour l'application de la fonction courante et pour, lorsqu'il n'existe pas de fonction suivant la fonction courante dans la séquence, transmettre le paquet en sortie à un réseau de communication par paquets.

Une entité de contrôle de fonctions réseaux élémentaires 400 va maintenant être décrite en relation avec la **figure 6****.** L'entité de contrôle de fonctions réseaux élémentaires 400 est agencée pour contrôler des séquences de fonctions réseaux élémentaires mises en oeuvre par des noeuds virtualisés. Ces fonctions réseaux élémentaires sont destinées à être appliquées sur un paquet de données à traiter relatif à un service. L'entité de contrôle de fonctions réseaux élémentaires 400 comprend :
- un premier module de réception 402, agencé pour recevoir depuis un noeud virtualisé mettant en oeuvre une fonction réseau élémentaire pour traiter le paquet, une requête de séquence de fonctions réseaux élémentaires, la demande comprenant un identifiant du service ;
- au moins une table 408, agencée pour mémoriser au moins une association entre un service et une séquence d'au moins une fonction réseau élémentaire ;
- un module d'obtention 404, agencé pour obtenir de la table 408 la séquence de fonction réseau élémentaire pour traiter le paquet à partir de l'identifiant du service ;
- un module d'envoi 406, agencé pour envoyer à un noeud virtualisé, la séquence d'au moins une fonction réseau élémentaire pour traiter le paquet ;

Dans un autre mode de réalisation, l'entité de contrôle de fonctions réseaux élémentaires 400 comprend un deuxième module de réception 410, agencé pour recevoir depuis une passerelle d'interconnexion 10, des informations relatives à un contexte partagé entre un terminal utilisateur ayant émis le paquet de données et cette passerelle d'interconnexion 10. Le module d'envoi 406 est alors également agencé pour envoyer la table 408 à un noeud virtualisé, lors de l'établissement d'une session utilisateur (e.g. PDP contexte, ou EPS bearer), entre un terminal utilisateur et la passerelle d'interconnexion. Dans ce mode de réalisation, le module d'obtention 404 peut également être agencé pour obtenir la séquence d'au moins une fonction réseau élémentaire à partir des informations relatives au contexte partagé entre le terminal utilisateur et la passerelle d'interconnexion 10.

Dans un autre mode de réalisation, l'entité de contrôle de fonctions réseaux élémentaires 400 comprend un module d'envoi/réception 412 agencé pour obtenir un profil utilisateur associé au terminal utilisateur ayant émis le paquet de données. Le module d'obtention 404 est alors également agencé pour obtenir la séquence de fonction réseau élémentaire à partir du profil utilisateur.

Dans un autre mode de réalisation, l'entité de contrôle de fonctions réseaux élémentaires 400 comprend un troisième module de réception 414, agencé pour recevoir depuis une entité de contrôle de noeuds virtualisés 500 des informations de disponibilité d'au moins un noeud virtualisé pour la mise en oeuvre d'une fonction réseau élémentaire de la séquence.

Il n'existe en outre aucune limitation quant aux structures de données utilisées pour mémoriser une association entre un service et une séquence d'au moins une fonction réseau élémentaire.

Une entité de contrôle de noeuds virtualisés 500 va maintenant être décrite en relation avec la **figure 7****.** Une entité de contrôle 500 de noeuds virtualisés est par ailleurs agencée pour contrôler au moins un noeud virtualisé d'un plan usager. Elle comprend :
- un module de collecte 502, agencé pour collecter des informations de disponibilité d'au moins un noeud virtualisé, pour la mise en oeuvre d'une fonction réseau élémentaire ;
- un module d'envoi 504, agencé pour envoyer à un noeud virtualisé, une liste de noeuds virtualisés disponibles et aptes à mettre en oeuvre une fonction réseau élémentaire ;
- au moins une table 506, agencée pour mémoriser les informations de disponibilité d'au moins un noeud virtualisé pour la mise en oeuvre d'une fonction réseau élémentaire.
- un module de mise à jour 507, agencé pour mettre à jour une liste de noeuds virtualisés disponibles et aptes à mettre en oeuvre une fonction réseau élémentaire, le module d'envoi étant alors également agencé pour envoyer une mise à jour de la liste.

Dans un mode particulier de réalisation, l'entité de contrôle de noeuds virtualisés comprend un module de réception 508, agencé pour recevoir depuis un noeud virtualisé mettant en oeuvre une fonction réseau élémentaire, une notification indiquant un état de saturation du noeud, le noeud étant susceptible de ne plus être apte à mettre en oeuvre la fonction réseau élémentaire lors du traitement d'un prochain paquet de données relatif au service.

Dans un autre mode particulier de réalisation, le module de réception 508 reçoit une notification indiquant un état de saturation du noeud, via une entité non représentée disposant d'une visibilité sur la disponibilité de l'ensemble des noeuds virtualisés du système 300.

Dans un autre mode particulier de réalisation, le module d'envoi 504 est également agencé pour envoyer un message (e.g. messages dit « *KeepAlive* ») à intervalles réguliers aux noeuds virtualisés afin d'obtenir un état de charge des noeuds virtualisés.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 402, 404, 406, 408, 410, 412, et 414 sont agencés pour mettre en oeuvre le procédé de traitement précédemment décrit. Il s'agit de préférence de modules logiciels comprenant des instructions logicielles pour faire exécuter celles des étapes du procédé de traitement précédemment décrit, mises en oeuvre par une entité de contrôle. L'invention concerne donc aussi :
- un programme pour une entité de contrôle, comprenant des instructions de code de programme destinées à commander l'exécution des étapes du procédé de traitement précédemment décrit, lorsque ledit programme est exécuté par ladite entité ;
- un support d'enregistrement lisible par une entité de contrôle sur lequel est enregistré le programme pour une telle entité.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de traitement d'un paquet de données relatif à un service, ledit paquet étant acheminé par une passerelle d'interconnexion (10) entre un réseau de communication mobile (100) et un réseau de communication par paquets (200), à destination dudit réseau de communication par paquets, ledit procédé comprenant une étape d'obtention (E31) par un noeud virtualisé d'un identifiant du service auquel le paquet est relatif ; ledit procédé comprenant en outre :
- une étape d'obtention (E32) à partir de l'identifiant de service, d'une séquence (70) d'au moins une fonction réseau élémentaire (30, 40, 60) pour traiter ledit paquet ;
- pour traiter le paquet, la première fonction de la séquence correspondant à la première itération à une fonction courante, le paquet étant transmis en entrée d'un noeud virtualisé (32, 42, 61) apte à mettre en oeuvre une fonction courante :
- application (E4) de la fonction courante au paquet en entrée pour obtenir un paquet en sortie par le noeud virtualisé ;
- s'il existe (E6) une fonction suivant la fonction courante dans la séquence :
- sélection (E61, E62) d'un prochain noeud virtualisé apte à mettre en oeuvre ladite fonction suivant la fonction courante dans la séquence, ladite fonction devenant alors fonction courante ;
- envoi (E63) du paquet en sortie au noeud sélectionné, le paquet en sortie devenant ainsi paquet en entrée pour l'application de la fonction courante ;
- s'il n'existe pas (E6) de fonction suivant la fonction courante dans la séquence, transmission (E64) du paquet en sortie au réseau de communication par paquets.

2. Procédé de traitement selon la revendication 1, dans lequel l'application de la fonction courante sur le paquet déclenche une mise à jour de ladite séquence d'au moins une fonction réseau élémentaire.

3. Procédé de traitement selon la revendication 1, dans lequel la séquence est obtenue sur requête, par le noeud courant, auprès d'une entité de contrôle de fonctions réseaux élémentaires, ladite requête comprenant un identifiant du service.

4. Procédé de traitement selon la revendication 1, comprenant en outre une étape d'obtention auprès d'une entité de contrôle de fonctions réseaux élémentaires, d'une table de correspondance entre au moins un service et une séquence d'au moins une fonction réseau élémentaire pour traiter un paquet relatif à un service, lors de l'établissement d'une session utilisateur entre un terminal utilisateur et la passerelle d'interconnexion.

5. Procédé de traitement selon la revendication 4, dans lequel ladite table de correspondance est déterminée par l'entité de contrôle de fonctions réseaux élémentaires en fonction d'un profil associé au terminal utilisateur.

6. Procédé de traitement selon la revendication 1, comprenant en outre une étape d'obtention auprès d'une entité de contrôle de noeuds virtualisés, d'une liste de noeuds virtualisés disponibles et aptes à mettre en oeuvre une fonction réseau élémentaire, et dans lequel le prochain noeud virtualisé est sélectionné à partir de ladite liste.

7. Procédé de traitement selon la revendication 1, comprenant en outre une étape d'envoi par le noeud virtualisé mettant en oeuvre la fonction courante, à une entité de contrôle de noeuds virtualisés, d'une notification indiquant un état de charge du noeud.

8. Système (300) de traitement d'un paquet, agencé pour traiter un paquet de données relatif à un service, ledit paquet étant acheminé par une passerelle d'interconnexion (10) entre un réseau de communication mobile (100) et un réseau de communication par paquets (200), à destination dudit réseau de communication par paquets, ledit système comprenant au moins un noeud virtualisé (31-32, 41-43, 51, 61-63, 80), ledit au moins un noeud virtualisé comprenant :
- un premier module d'obtention (802), agencé pour obtenir un identifiant du service auquel le paquet est relatif ;
- un deuxième module d'obtention (804), agencé pour obtenir à partir de l'identifiant de service, une séquence d'au moins une fonction réseau élémentaire pour traiter ledit paquet ;
et la première fonction de la séquence correspondant à la première itération à une fonction courante :
- un module de traitement (806), agencé pour appliquer la fonction courante au paquet en entrée pour obtenir un paquet en sortie ;
- un module de vérification (808), agencé pour vérifier s'il existe une fonction suivant la fonction courante dans la séquence,
et le cas échéant,
- un module de sélection (810), agencé pour, lorsqu'il existe une fonction suivant la fonction courante dans la séquence, sélectionner un prochain noeud virtualisé agencé pour mettre en oeuvre ladite fonction suivant la fonction courante dans la séquence, ladite fonction devenant alors fonction courante ;
- un module d'envoi (812), agencé pour, lorsqu'il existe une fonction suivant la fonction courante dans la séquence, envoyer un paquet en sortie à un noeud sélectionné par le module de sélection, le paquet en sortie devenant ainsi paquet en entrée pour l'application de la fonction courante et pour, lorsqu'il n'existe pas de fonction suivant la fonction courante dans la séquence, transmettre le paquet en sortie au réseau de communication par paquets.

9. Système selon la revendication 8, comprenant dans un plan usager (320) :
- au moins un noeud virtualisé (31-32, 41-43, 51, 61-63) apte à mettre en oeuvre une fonction réseau élémentaire (30, 40, 50, 60) pour traiter le paquet relatif à un service ;
et dans un plan de contrôle (310) :
- une entité de contrôle (400) de fonctions réseaux élémentaires, agencée pour contrôler les fonctions réseaux élémentaires mises en oeuvre par des noeuds virtualisés appartenant au plan usager, comprenant :
- un premier module de réception (402), agencé pour recevoir depuis un noeud virtualisé mettant en oeuvre une fonction réseau élémentaire pour traiter ledit paquet, une requête de séquence de fonctions réseaux élémentaires, ladite requête comprenant un identifiant du service ;
- un module d'obtention (404), agencé pour obtenir la séquence d'au moins une fonction réseau élémentaire pour traiter le paquet à partir de l'identifiant du service ;
- un module d'envoi (406), agencé pour envoyer à un noeud virtualisé, la séquence d'au moins une fonction réseau élémentaire pour traiter le paquet.

10. Système selon la revendication 8, comprenant en outre une entité de contrôle (500) de noeuds virtualisés, agencée pour contrôler ledit au moins un noeud virtualisé du plan usager, comprenant :
- un module de collecte (502), agencé pour collecter des informations de disponibilité d'au moins un noeud virtualisé, pour la mise en oeuvre d'une fonction réseau élémentaire ;
- un module d'envoi (504), agencé pour envoyer à un noeud virtualisé, une liste de noeuds virtualisés disponibles et aptes à mettre en oeuvre une fonction réseau élémentaire ;
- un module de mise à jour (507), agencé pour mettre à jour une liste de noeuds virtualisés disponibles et aptes à mettre en oeuvre une fonction réseau élémentaire, le module d'envoi étant alors également agencé pour envoyer une mise à jour de la liste.

11. Système selon la revendication 8, dans lequel l'entité de contrôle de fonctions réseaux élémentaires comprend en outre :
- un deuxième module de réception (410), agencé pour recevoir depuis la passerelle d'interconnexion 10, des informations relatives à un contexte partagé entre un terminal utilisateur ayant émis le paquet de données et ladite passerelle d'interconnexion ;
le module d'envoi (406) de l'entité de contrôle de fonctions réseaux élémentaires étant alors également agencé pour envoyer au moins une table mémorisant au moins une association entre un service et une séquence d'au moins une fonction réseau élémentaire, à un noeud virtualisé, lors de l'établissement d'une session utilisateur entre un terminal utilisateur et la passerelle d'interconnexion.

12. Système selon la revendication 9, dans lequel l'entité de contrôle de fonctions réseaux élémentaires (400) comprend en outre :
- un module d'envoi/réception (412) agencé pour obtenir un profil utilisateur associé au terminal utilisateur ayant émis le paquet de données ;
le module d'obtention (404) de l'entité de contrôle de fonctions réseaux élémentaires est alors également agencé pour obtenir la séquence d'au moins une fonction réseau élémentaire à partir dudit profil utilisateur.

13. Système selon la revendication 8, dans lequel l'entité de contrôle de noeuds virtualisés comprend en outre un module de réception (508), agencé pour recevoir depuis un noeud virtualisé mettant en oeuvre une fonction réseau élémentaire, une notification indiquant un état de saturation du noeud, ledit noeud étant susceptible de ne plus être apte à mettre en oeuvre la fonction réseau élémentaire lors du traitement d'un prochain paquet de données relatif au service.

14. Programme pour une entité de contrôle de fonctions réseaux élémentaires, comprenant des instructions de code de programme destinées à commander l'exécution des étapes du procédé mises en oeuvre par une entité de contrôle de fonctions réseaux élémentaires selon l'une des revendications 3 à 5, lorsque ledit programme est exécuté par ladite entité.

15. Support d'enregistrement lisible par une entité de contrôle de fonctions réseaux élémentaires sur laquelle est enregistré le programme selon la revendication 14.

## Patentansprüche

1. Verfahren zur Verarbeitung eines auf einen Dienst bezogenen Datenpakets, wobei das Paket von einem Verbindungs-Gateway (10) zwischen einem Mobilkommunikationsnetz (100) und einem Paketkommunikationsnetz (200) zum Datenkommunikationsnetz befördert wird, wobei das Verfahren einen Schritt der Erlangung (E31) einer Kennung des Diensts, auf den sich das Paket bezieht, durch einen virtualisierten Knoten enthält;
wobei das Verfahren außerdem enthält:
- einen Schritt der Erlangung (E32), ausgehend von der Dienstkennung, einer Folge (70) mindestens einer elementaren Netzfunktion (30, 40, 60) zur Verarbeitung des Pakets;
- zur Verarbeitung des Pakets, wobei die erste Funktion der Folge der ersten Iteration bei einer laufenden Funktion entspricht, das Paket an den Eingang eines virtualisierten Knotens (32, 42, 61) übertragen wird, der eine laufende Funktion durchführen kann:
- Anwendung (E4) der laufenden Funktion an das Paket am Eingang, um ein Paket am Ausgang durch den virtualisierten Knoten zu erlangen;
- wenn es eine Funktion nach der laufenden Funktion in der Folge gibt (E6):
- Auswahl (E61, E62) eines nächsten virtualisierten Knotens, der die Funktion nach der laufenden Funktion in der Folge durchführen kann, wobei die Funktion dann zur laufenden Funktion wird;
- Senden (E63) des Pakets am Ausgang an den ausgewählten Knoten, wobei das Paket am Ausgang so Paket am Eingang für die Anwendung der laufenden Funktion wird;
- wenn es keine Funktion nach der laufenden Funktion in der Folge gibt (E6), Übertragung (E64) des Pakets am Ausgang an das Paketkommunikationsnetz.

2. Verarbeitungsverfahren nach Anspruch 1, wobei die Anwendung der laufenden Funktion an das Paket eine Aktualisierung der Folge mindestens einer elementaren Netzfunktion auslöst.

3. Verarbeitungsverfahren nach Anspruch 1, wobei die Folge auf Anforderung durch den laufenden Knoten bei einer Kontrollinstanz elementarer Netzfunktionen erlangt wird, wobei die Anforderung eine Kennung des Diensts enthält.

4. Verarbeitungsverfahren nach Anspruch 1, das außerdem einen Schritt der Erlangung einer Entsprechungstabelle zwischen mindestens einem Dienst und einer Folge mindestens einer elementaren Netzfunktion bei einer Kontrollinstanz elementarer Netzfunktionen enthält, um beim Aufbau einer Benutzersitzung zwischen einem Benutzerendgerät und dem Verbindungs-Gateway ein auf einen Dienst bezogenes Paket zu verarbeiten.

5. Verarbeitungsverfahren nach Anspruch 4, wobei die Entsprechungstabelle von der Kontrollinstanz elementarer Netzfunktionen abhängig von einem dem Benutzerendgerät zugeordneten Profil bestimmt wird.

6. Verarbeitungsverfahren nach Anspruch 1, das außerdem einen Schritt der Erlangung einer Liste virtualisierter Knoten bei einer Kontrollinstanz virtualisierter Knoten enthält, die verfügbar sind und eine elementare Netzfunktion durchführen können, und wobei der nächste virtualisierte Knoten ausgehend von der Liste ausgewählt wird.

7. Verarbeitungsverfahren nach Anspruch 1, das außerdem einen Schritt des Sendens einer einen Ladezustand des Knotens anzeigenden Benachrichtigung an eine Kontrollinstanz virtualisierter Knoten durch den die laufende Funktion durchführenden virtualisierten Knoten enthält.

8. System (300) zur Verarbeitung eines Pakets, das eingerichtet ist, um ein auf einen Dienst bezogenes Datenpaket zu verarbeiten, wobei das Paket von einem Verbindungs-Gateway (10) zwischen einem Mobilkommunikationsnetz (100) und einem Paketkommunikationsnetz (200) an das Paketkommunikationsnetz befördert wird, wobei das System mindestens einen virtualisierten Knoten (31-32, 41-43, 51, 61-63, 80) enthält, wobei der mindestens eine virtualisierte Knoten enthält:
- ein erstes Erlangungsmodul (802), das eingerichtet ist, um eine Kennung des Diensts zu erlangen, auf den sich das Paket bezieht;
- ein zweites Erlangungsmodul (804), das eingerichtet ist, um ausgehend von der Dienstkennung eine Folge mindestens einer elementaren Netzfunktion zu erlangen, um das Paket zu verarbeiten;
und die erste Funktion der Folge der ersten Iteration bei einer laufenden Funktion entspricht:
- ein Verarbeitungsmodul (806), das eingerichtet ist, um die laufende Funktion an das Paket am Eingang anzuwenden, um ein Paket am Ausgang zu erlangen;
- ein Überprüfungsmodul (808), das eingerichtet ist, um zu überprüfen, ob es eine Funktion nach der laufenden Funktion in der Folge gibt,
und gegebenenfalls,
- ein Auswahlmodul (810), das eingerichtet ist, um, wenn es eine Funktion nach der laufenden Funktion in der Folge gibt, einen nächsten virtualisierten Knoten auszuwählen, der eingerichtet ist, um die Funktion nach der laufenden Funktion in der Folge durchzuführen, wobei die Funktion dann zur laufenden Funktion wird;
- ein Sendemodul (812), das eingerichtet ist, um, wenn es eine Funktion nach der laufenden Funktion in der Folge gibt, ein Paket am Ausgang an einen vom Auswahlmodul ausgewählten Knoten zu senden, wobei das Paket am Ausgang so zum Paket am Eingang für die Anwendung der laufenden Funktion wird, und um, wenn es keine Funktion nach der laufenden Funktion in der Folge gibt, das Paket am Ausgang an das Paketkommunikationsnetz zu übertragen.

9. System nach Anspruch 8, das auf einer Benutzerebene (320) enthält:
- mindestens einen virtualisierten Knoten (31-32, 41-43, 51, 61-63), der eine elementare Netzfunktion (30, 40, 50, 60) durchführen kann, um das auf einen Dienst bezogene Paket zu verarbeiten;
und auf einer Kontrollebene (310):
- eine Kontrollinstanz (400) elementarer Netzfunktionen, die eingerichtet ist, um die elementaren Netzfunktionen zu kontrollieren, die von zur Benutzerebene gehörenden virtualisierten Knoten durchgeführt werden, die enthält:
- ein erstes Empfangsmodul (402), das eingerichtet ist, um von einem eine elementare Netzfunktion zur Verarbeitung des Pakets durchführenden virtualisierten Knoten eine Anforderung einer Folge elementarer Netzfunktionen zu empfangen, wobei die Anforderung eine Kennung des Diensts enthält;
- ein Erlangungsmodul (404), das eingerichtet ist, um die Folge mindestens einer elementaren Netzfunktion zu erlangen, um das Paket ausgehend von der Kennung des Diensts zu verarbeiten;
- ein Sendemodul (406), das eingerichtet ist, um die Folge mindestens einer elementaren Netzfunktion zur Verarbeitung des Pakets an einen virtualisierten Knoten zu senden.

10. System nach Anspruch 8, das außerdem eine Kontrollinstanz (500) virtualisierter Knoten enthält, die eingerichtet ist, um den mindestens einen virtualisierten Knoten der Benutzerebene zu kontrollieren, die enthält:
- ein Sammelmodul (502), das eingerichtet ist, um Verfügbarkeitsinformationen mindestens eines virtualisierten Knotens für die Durchführung einer elementaren Netzfunktion zu sammeln;
- ein Sendemodul (504), das eingerichtet ist, um eine Liste virtualisierter Knoten an einen virtualisierten Knoten zu senden, die verfügbar sind und eine elementare Netzfunktion durchführen können;
- ein Aktualisierungsmodul (507), das eingerichtet ist, um eine Liste virtualisierter Knoten zu aktualisieren, die verfügbar sind und eine elementare Netzfunktion durchführen können, wobei das Sendemodul dann ebenfalls eingerichtet ist, um eine Aktualisierung der Liste zu senden.

11. System nach Anspruch 8, wobei die Kontrollinstanz elementarer Netzfunktionen außerdem enthält:
- ein zweites Empfangsmodul (410), das eingerichtet ist, um vom Verbindungs-Gateway (10) Informationen bezüglich eines Kontexts zu empfangen, der von einem Benutzerendgerät, das das Datenpaket gesendet hat, und dem Verbindungs-Gateway gemeinsam genutzt wird;
wobei das Sendemodul (406) der Kontrollinstanz elementarer Netzfunktionen dann ebenfalls eingerichtet ist, um beim Aufbau einer Benutzersitzung zwischen einem Benutzerendgerät und dem Verbindungs-Gateway mindestens eine Tabelle, die mindestens eine Zuordnung zwischen einem Dienst und einer Folge mindestens einer elementaren Netzfunktion speichert, an einen virtualisierten Knoten zu senden.

12. System nach Anspruch 9, wobei die Kontrollinstanz elementarer Netzfunktionen (400) außerdem enthält:
- ein Sende-/Empfangsmodul (412), das eingerichtet ist, um ein Benutzerprofil zu erlangen, das dem Benutzerterminal zugeordnet ist, das das Datenpaket gesendet hat;
wobei das Erlangungsmodul (404) der Kontrollinstanz elementarer Netzfunktionen dann ebenfalls eingerichtet ist, um die Folge mindestens einer elementaren Netzfunktion ausgehend vom Benutzerprofil zu erlangen.

13. System nach Anspruch 8, wobei die Kontrollinstanz virtualisierter Knoten außerdem ein Empfangsmodul (508) enthält, das eingerichtet ist, um von einem virtualisierten Knoten, der eine elementare Netzfunktion durchführt, eine Benachrichtigung zu empfangen, die einen Sättigungszustand des Knotens anzeigt, wobei der Knoten dann möglicherweise nicht mehr fähig ist, die elementare Netzfunktion bei der Verarbeitung eines nächsten auf den Dienst bezogenen Datenpakets durchzuführen.

14. Programm für eine Kontrollinstanz elementarer Netzfunktionen, das Programmcodeanweisungen enthält, die dazu bestimmt sind, die Ausführung der Schritte des Verfahrens zu steuern, die von einer Kontrollinstanz elementarer Netzfunktionen nach einem der Ansprüche 3 bis 5 durchgeführt werden, wenn das Programm von der Instanz ausgeführt wird.

15. Aufzeichnungsträger, der von einer Kontrollinstanz elementarer Netzfunktionen lesbar ist, auf dem das Programm nach Anspruch 14 aufgezeichnet ist.

## Claims

1. Method of processing a data packet relating to a service, said packet being conveyed by an interconnection gateway (10) between a mobile communication network (100) and a packet communication network (200), destined for said packet communication network, said method comprising a step (E31) of obtaining by a virtualized node an identifier of the service to which the packet relates;
said method furthermore comprising:
- a step (E32) of obtaining, on the basis of the service identifier, a sequence (70) of at least one elementary network function (30, 40, 60) so as to process said packet;
- to process the packet, the first function of the sequence corresponding at the first iteration to a current function, the packet being transmitted as input of a virtualized node (32, 42, 61) able to implement a current function:
- application (E4) of the current function to the packet as input so as to obtain a packet as output by the virtualized node;
- if there exists (E6) a function following the current function in the sequence:
- selection (E61, E62) of a next virtualized node able to implement said function following the current function in the sequence, said function then becoming current function;
- dispatching (E63) of the output packet to the selected node, the output packet thus becoming input packet for the application of the current function;
- if there does not exist (E6) any function following the current function in the sequence, transmission (E64) of the packet as output to the packet communication network.

2. Processing method according to Claim 1, in which the application of the current function to the packet triggers an updating of said sequence of at least one elementary network function.

3. Processing method according to Claim 1, in which the sequence is obtained on request, by the current node, from an elementary network functions control entity, said request comprising an identifier of the service.

4. Processing method according to Claim 1, furthermore comprising a step of obtaining, from an elementary network functions control entity, a lookup table of correspondence between at least one service and a sequence of at least one elementary network function so as to process a packet relating to a service, upon the establishment of a user session between a user terminal and the interconnection gateway.

5. Processing method according to Claim 4, in which said lookup table of correspondence is determined by the elementary network functions control entity as a function of a profile associated with the user terminal.

6. Processing method according to Claim 1, furthermore comprising a step of obtaining, from a virtualized nodes control entity, a list of virtualized nodes which are available and able to implement an elementary network function, and in which the next virtualized node is selected on the basis of said list.

7. Processing method according to Claim 1, furthermore comprising a step of dispatching, by the virtualized node implementing the current function, to a virtualized nodes control entity, a notification indicating a state of loading of the node.

8. System (300) for processing a packet, designed to process a data packet relating to a service, said packet being conveyed by an interconnection gateway (10) between a mobile communication network (100) and a packet communication network (200), destined for said packet communication network, said system comprising at least one virtualized node (31-32, 41-43, 51, 61-63, 80), said at least one virtualized node comprising:
- a first obtaining module (802), designed to obtain an identifier of the service to which the packet relates;
- a second obtaining module (804), designed to obtain, on the basis of the service identifier, a sequence of at least one elementary network function so as to process said packet;
and the first function of the sequence corresponding at the first iteration to a current function:
- a processing module (806), designed to apply the current function to the input packet so as to obtain an output packet;
- a verification module (808), designed to verify whether there exists a function following the current function in the sequence,
and if appropriate,
- a selection module (810), designed to, when there exists a function following the current function in the sequence, select a next virtualized node designed to implement said function following the current function in the sequence, said function then becoming current function;
- a dispatching module (812), designed to, when there exists a function following the current function in the sequence, dispatch an output packet to a node selected by the selection module, the output packet thus becoming input packet for the application of the current function and designed to, when there does not exist any function following the current function in the sequence, transmit the output packet to the packet communication network.

9. System according to Claim 8, comprising in a user plane (320):
- at least one virtualized node (31-32, 41-43, 51, 61-63) able to implement an elementary network function (30, 40, 50, 60) so as to process the packet relating to a service;
and in a control plane (310):
- an elementary network functions control entity (400), designed to control the elementary network functions implemented by virtualized nodes belonging to the user plane, comprising:
- a first reception module (402), designed to receive, from a virtualized node implementing an elementary network function so as to process said packet, an elementary network functions sequence request, said request comprising an identifier of the service;
- an obtaining module (404), designed to obtain the sequence of at least one elementary network function so as to process the packet on the basis of the identifier of the service;
- a dispatching module (406), designed to dispatch to a virtualized node the sequence of at least one elementary network function so as to process the packet.

10. System according to Claim 8, furthermore comprising a virtualized nodes control entity (500), designed to control said at least one virtualized node of the user plane, comprising:
- a collection module (502), designed to collect availability information in respect of at least one virtualized node, for the implementation of an elementary network function;
- a dispatching module (504), designed to dispatch to a virtualized node a list of virtualized nodes which are available and able to implement an elementary network function;
- an updating module (507), designed to update a list of virtualized nodes which are available and able to implement an elementary network function, the dispatching module then also being designed to dispatch an update of the list.

11. System according to Claim 8, in which the elementary network functions control entity furthermore comprises:
- a second reception module (410), designed to receive, from the interconnection gateway 10, information relating to a context shared between a user terminal that sent the data packet and said interconnection gateway;
the dispatching module (406) of the elementary network functions control entity then also being designed to dispatch at least one table storing at least one association between a service and a sequence of at least one elementary network function, to a virtualized node, upon the establishment of a user session between a user terminal and the interconnection gateway.

12. System according to Claim 9, in which the elementary network functions control entity (400) furthermore comprises:
- a dispatching/reception module (412) designed to obtain a user profile associated with the user terminal that sent the data packet;
the obtaining module (404) of the elementary network functions control entity is then also designed to obtain the sequence of at least one elementary network function on the basis of said user profile.

13. System according to Claim 8, in which the virtualized nodes control entity furthermore comprises a reception module (508), designed to receive, from a virtualized node implementing an elementary network function, a notification indicating a state of saturation of the node, said node possibly no longer being able to implement the elementary network function during the processing of a next data packet relating to the service.

14. Program for an elementary network functions control entity, comprising program code instructions intended to drive the execution of the steps of the method that are implemented by an elementary network functions control entity according to one of Claims 3 to 5, when said program is executed by said entity.

15. Recording medium readable by an elementary network functions control entity on which the program according to Claim 14 is recorded.
